# EUROPEAN PATENT APPLICATION

(11) **EP 4 535 549 A1**
(43) Date of publication of application: **09.04.2025**
(21) Application number: 23872992.5
(22) Date of filing: 25.09.2023
(51) Int. Cl.: H01M 50/536, H01M 50/533, H01M 50/178, B23K 20/10, B23K 26/21, H01M 50/54, H01M 50/557, H01M 50/105

(54) **BATTERY CELL AND BONDING APPARATUS FOR MANUFACTURING SAME**

(30) Priority: 26.09.2022 KR 20220121832; 22.09.2023 KR 20230126956
(71) Applicant: LG Energy Solution, Ltd., Seoul 07335 (KR)
(72) Inventor: SON, Gilsang, Daejeon 34122 (KR); KONG, Jinhak, Daejeon 34122 (KR); PARK, Wan Geun, Daejeon 34122 (KR); LEE, Yong Tae, Daejeon 34122 (KR); KO, Myung Hoon, Daejeon 34122 (KR); JEON, Youngje, Daejeon 34122 (KR)
(74) Representative: Plasseraud IP
(86) International application number: PCT/KR2023/014589
(87) International publication number: WO 2024/071875

(57) **Abstract**

A battery cell according to an embodiment of the present disclosure includes: an electrode assembly that includes a plurality of electrodes stacked with a separator interposed therebetween; and a battery case that houses the electrode assembly, wherein the electrode assembly includes a plurality of electrode tabs each formed to extend from the plurality of electrodes, which are the plurality of electrode tabs including an electrode tab bundle portion coupled between the same polarities, and wherein a pattern portion is included on at least one surface of the electrode tab bundle portion, the pattern portion includes a plurality of sub-patterns arranged in a row along the horizontal and vertical directions of the electrode tab, respectively, the sub-pattern has a concave shape in the height direction of the electrode tab bundle portion, and corners of the
pattern portion include chamfered portions.

## Description

### [TECHNICAL FIELD]

### Cross Citation with Related Application(s)

This application claims the benefit of Korean Patent Application No. 10-2022-0121832 filed on September 26, 2022 and Korean Patent Application No. 10-2023-0126956 filed on September 22, 2023 in the Korean Intellectual Property Office, the disclosures of which are incorporated herein by reference in their entirety.

The present disclosure relates to an electrode assembly including an electrode tab that minimizes generation of disconnection of an electrode tab, and a joining device for manufacturing the same, and more particularly, to a battery cell having a pattern of a welding portion to minimize generation of disconnection of an electrode tab, and an electrode tab joining device for manufacturing the same.

### [BACKGROUND]

Demand for secondary batteries is increasing as an energy source for electronic devices such as mobile phones, laptop computers, wearable devices, or electric vehicles. Secondary batteries are classified into nickel-cadmium secondary batteries, nickel-hydrogen secondary batteries, and lithium secondary batteries, depending on the type of electrode, and research and development on lithium secondary batteries having the advantages of high operating voltage and high energy density per unit weight are being actively conducted.

Depending on the shape of the battery case, the lithium secondary battery is classified into a prismatic secondary battery and a cylindrical secondary battery in which the electrode assembly is built into in a metal can, and a pouch-type secondary battery in which the electrode assembly is built into a pouch case made of an aluminum laminate sheet.

The electrode assembly may have a stack type electrode assembly shape in which plate-shaped electrodes with electrode tabs protruding in one side or both side directions are stacked, and the stacked electrode tabs form an electrode tab bundle and are coupled with electrode leads to form an electrode terminal.

For this purpose, first, multiple layers of electrode tabs are connected, and then the joined electrode tabs and the electrode leads are joined together. Generally, ultrasonic welding or laser welding is applied as a joining method. In the joining method, when ultrasonic welding is used, a joining area between electrode tabs and/or between an electrode tab and an electrode lead is formed in accordance with the protruding pattern shape of a horn and an anvil.

On the other hand, due to the process for connecting the electrode tab and the electrode lead, connection of the electrode lead to the external frame, fixation, and periodic charging and discharging, vibration, impact, or the like, a tensile force is applied to the electrode lead and electrode tab, and a phenomenon occurs in which the electrode tab having a relatively weak strength is physically disconnected. There is a high possibility that safety issues such as a decrease in battery cell capacity and heat generation occur at the time of disconnection generating.

In order to prevent such problems, there is a high need for a technology that can improve a joining portion between electrode tabs or a joining portion between electrode tabs and electrode leads and thus minimize the risk of disconnection.

### [DETAILED DESCRIPTION OF THE INVENTION]

### [Technical Problem]

The present disclosure was designed to solve the problems as above, and an object of the present disclosure is to provide a battery cell that can prevent disconnection of an electrode tab at a welding portion of an electrode tab, and a battery cell joining device for manufacturing the same.

### [Technical Solution]

According to one embodiment of the present disclosure, there is provided a battery cell comprising: an electrode assembly that includes a plurality of electrodes stacked with a separator interposed therebetween, and a battery case that houses the electrode assembly, wherein the electrode assembly includes a plurality of electrode tabs each formed to extend from the plurality of electrodes, which are the plurality of electrode tabs including an electrode tab bundle portion coupled between the same polarities, and wherein a pattern portion is included on at least one surface of the electrode tab bundle portion, the pattern portion includes a plurality of sub-patterns arranged in a row along the horizontal and vertical directions of the electrode tab, respectively, the sub-pattern has a concave shape in the height direction of the electrode tab bundle portion, and corners of the pattern portion include chamfered portions.

The sub-pattern located at least at the most distal end in each of the horizontal and vertical directions among the plurality of sub-patterns may have a right-angled triangle shape or include a chamfered portion.

The vertical length(H)/horizontal length(W) value of the right-angled triangle or the chamfered portion of the sub-pattern located at the most distal end may be 0.4 to 0.82.

The vertical length(H)/horizontal length(W) value of the right-angled triangle or the chamfered portion of the sub-pattern located at the most distal end may be 0.7.

The rest of the plurality of sub-patterns may each have a rectangular or square shape, and each side of the rectangular or square sub-pattern may be arranged to be parallel to an edge of the electrode tab.

The pattern portion may be arranged to be spaced apart from an edge of the electrode tab, and may be arranged to be spaced apart between the sub-patterns.

The pattern portion may be formed at a joining portion between the electrode tab bundle portion and the electrode lead.

The pattern portion has a rectangular shape as a whole, and four corners of the pattern portion may each include a chamfered portion.

The pattern portion has a rectangular shape as a whole, and two corners toward the electrode lead side among the four corners of the pattern portion may each include a chamfered portion.

The sub-pattern located at the most distal end is a right-angled triangle, a sub-pattern neighboring to the sub-pattern located at the most distal end includes a chamfered portion, a hypotenuse of the right-angled triangle of the sub-pattern located at the most distal end and a hypotenuse of the chamfered portion of the neighboring sub-pattern may be on the same extension line.

One vertex of the sub-pattern neighboring to the sub-pattern located at the most distal end may be located on an extension line of the hypotenuse of the right-angled triangle of the sub-pattern located at the most distal end.

According to another embodiment of the present disclosure, there is provided a battery cell joining device including a horn and an anvil for manufacturing a battery cell, the battery cell comprising: an electrode assembly that includes a plurality of electrodes stacked with a separator interposed therebetween, and a battery case that houses the electrode assembly, wherein the horn includes a welding portion including a plurality of horn protrusions, and wherein the welding portion includes a plurality of horn protrusions arranged in a row along the horizontal and vertical directions of the horn, respectively, and a corner of the welding portion includes a chamfered portion.

The uppermost surface of the horn protrusion located at least at the most distal end in each of the horizontal and vertical directions among the plurality of horn protrusions may have a right-angled triangle shape or include a chamfered portion.

The vertical length(H)/horizontal length(W) value of the right-angled triangle or the chamfered portion of the uppermost surface of the horn protrusion located at the most distal end may be 0.42 to 0.8.

The vertical length(H)/horizontal length(W) value of the right-angled triangle or the chamfered portion of the uppermost surface of the horn protrusion located at the most distal end may be 0.7.

The uppermost surfaces of the rest of the plurality of horn protrusions each have a rectangular or square shape, and each side of the rectangular or square shape of the horn protrusion may be arranged to be parallel to the edge of the electrode tab.

The electrode assembly includes a plurality of electrode tabs each formed to extend from the plurality of electrodes, which are the plurality of electrode tabs including an electrode tab bundle portion coupled between the same polarities, and the battery cell joining device may join the plurality of electrode tabs so as to form the electrode tab bundle portion.

The electrode assembly includes a plurality of electrode tabs each formed to extend from the plurality of electrodes, which are the plurality of electrode tabs including an electrode tab bundle portion coupled between the same polarities, and the battery cell joining device may join the electrode tab bundle portion and the electrode lead.

When viewed from above, the welding portion has a rectangular shape as a whole, and the four corners of the welding portion each may include a chamfered portion.

When viewed from above, the welding portion has a rectangular shape as a whole, and two corners of the four corners of the welding portion may each include a chamfered portion.

The uppermost surface of the horn protrusion located at the most distal end has a right-angled triangle, a horn protrusion neighboring to the horn protrusion located at the most distal end includes a chamfered portion, and a hypotenuse of the right-angled triangle of the horn protrusion located at the distal end and a hypotenuse of the chamfered portion of the neighboring horn protrusion may be on the same extension line.

One vertex of the horn protrusion neighboring to the horn protrusion located at the most distal end may be located on an extension line of the hypotenuse of the right-angled triangle of the horn protrusion located at the most distal end.

The battery cell joining device may be an ultrasonic welding device or a laser welding device.

### [Advantageous Effects]

As described above, the present disclosure has the effect of eliminating disconnection that may generate during welding of an electrode tab. Thereby, the present disclosure has the effect of reducing the welding defect rate when manufacturing the battery cell and of lowering the manufacturing cost of the battery cell.

### [BRIEF DESCRIPTION OF THE DRAWINGS]

FIG. 1 is a perspective view of an electrode assembly according to an embodiment of the present disclosure;
FIG. 2 is a side view illustrating a state in which electrode tabs are located between a horn and an anvil of a joining device according to an embodiment of the present disclosure;
FIG. 3 illustrates a plane view of the horn of FIG. 2, and FIG. 4 illustrates a plane view of the horn of FIG. 3 when the horn is partially modified;
FIGS. 5 and 6 are partial enlarged views of the horn of the joining device of FIG. 3, illustrating a perspective view and a plan view, respectively;
FIG. 7 illustrates a modification of FIGS. 5 and 6 as another embodiment of the present disclosure;
FIG. 8 illustrates yet another embodiment of the present disclosure;
FIGS. 9 and 10 illustrate welding pattern portions formed on the electrode tab when the electrode tab is welded by the horn of FIG. 3, and FIG. 11 illustrates a welding pattern portion formed on the electrode tab when the electrode tab is welded by the horn of FIG. 4;
FIG. 12 is a graph showing the tensile strength of the electrode tab joined to the horn in accordance with the ratio between the vertical length(H) and horizontal length(W) of the horn protrusion located at the most distal end of the horn of FIG. 5;
FIG. 13 illustrates a stress distribution chart of the electrode tab joined to the horn in accordance with the ratio between the vertical length(H) and the horizontal length(W) of the horn protrusion located at the most distal end of the horn of FIG. 5;
FIG. 14 illustrates a comparison of the tensile strength and stress distribution chart between a comparative example and an example (Example 1) of the present disclosure;
FIG. 15 schematically illustrates a partially enlarged view of the welding pattern portion of the electrode tab of FIG. 3; and
FIGS. 16 to 18 are perspective views of an anvil according to an embodiment of the present disclosure.

### [DETAILED DESCRIPTION OF THE EMBODIMENTS]

Hereinafter, embodiments of the present disclosure will be described in detail with reference to the accompanying drawings in order to allow an ordinary skilled person in the art to easily implement the invention. However, in describing in detail the operation principle of a preferred embodiment of the present disclosure, if it is deemed that a detailed description of related known functions or configurations may unnecessarily obscure the subject matter of the invention, the detailed description will be omitted.

Further, the same or similar constituent elements will be designated by the same reference numerals throughout the drawings. Throughout this specification, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising", will be understood to imply the inclusion of stated elements but not the exclusion of any other elements.

The electrode assembly according to the present disclosure includes a shape in which plate-shaped electrode plates 104 having electrode tabs protruding on one or both sides are stacked with a separator interposed therebetween, and thus may be a stack type electrode assembly in which a plurality of cathode plates and a plurality of anode plates are stacked with a separator interposed therebetween, a stacked/folded electrode assembly in which a stacked unit cell containing two or three electrodes is wound on a separation film at a certain interval, or a lamination/stack type electrode assembly in which a plurality of unit cells are stacked in a vertical direction and joined.

The electrode tabs protruding from the electrode assembly are welded and joined to form a cathode tab bundle and an anode tab bundle, and are coupled with the cathode lead and the anode lead, respectively, to serve as electrode terminals.

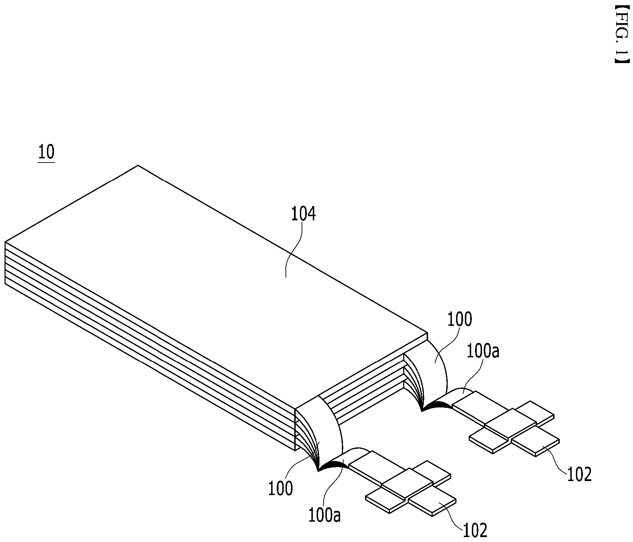

In this regard, FIG. 1 illustrates a perspective view of an electrode assembly according to the present disclosure.

Referring to FIG. 1, the electrode assembly 10 is, for example, a stack type electrode assembly having a structure in which plate-shaped electrode plates 104 are stacked, and the electrode tab 100 includes an electrode tab bundle 100a formed by coupling a plurality of electrode tabs 100 in a state of protruding on one side. The electrode tab bundle 100a is coupled with the electrode lead 102 and extends to the outside of the battery case to form an electrode terminal. FIG. 1 illustrates a case where the cathode tab 100 and the anode tab 100 protrude on one side, but the present disclosure is not limited to those illustrated, and various modifications and changes can be made, such as, for example, including cases where the cathode tab 100 and the anode tab 100 each protrude from both sides of the electrode assembly 10. On the other hand, the electrode tab bundle 100a is coupled to the electrode lead 102 on the outer surface of the uppermost electrode tab or the outer surface of the lowermost electrode tab.

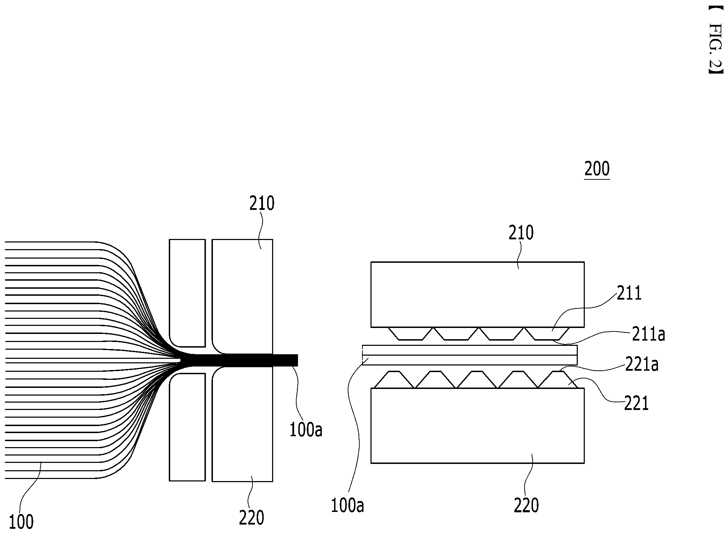

FIGS. 2 to 6 illustrate a joining device including a horn according to an embodiment of the present disclosure. The joining device 200 according to an embodiment of the present disclosure may be an ultrasonic welding device, a laser welding device, or a welding device that performs both ultrasonic and laser welding.

FIG. 2 is a side view illustrating a state in which electrode tabs are located between a horn and an anvil of a joining device according to an embodiment of the present disclosure. Referring to FIG. 2, the joining device 200 includes a horn 210 and an anvil 220. The stacked electrode tabs 100 are located between the horn 210 and the anvil 220, and then the electrode tabs 100 are coupled by applying ultrasonic waves or irradiating a laser to form an electrode tab bundle 100a.

Alternatively, the electrode tab bundle 100a of the electrode tab 100 and the electrode lead 102 are partially overlapped or laid over with each other, which are placed between the horn 210 and the anvil 220, and then the electrode tab bundle 100a of the electrode tab 100 and the electrode lead 102 are coupled by applying ultrasonic waves or irradiating a laser.

When the joining device 200 is an ultrasonic welding device, it includes an ultrasonic oscillator, an ultrasonic vibrator, a booster, a horn and an anvil. The ultrasonic oscillator converts a 60Hz AC current into a high frequency current of 20kHz or more and supplies it to the ultrasonic vibrator. The ultrasonic vibrator plays a role of converting electrical energy into mechanical energy, and are also called piezoelectric ultrasonic device. That is, the high-frequency current generated by the ultrasonic oscillator is converted into ultrasonic waves by the ultrasonic vibrator, and the ultrasonic waves converted in this way are transmitted to a booster. The booster amplifies the received ultrasonic waves and transmits them to a horn. The horn pressurizes the surface of the electrode tabs placed on the anvil to a certain load and simultaneously applies amplified ultrasonic waves received from the booster to the electrode tabs, thereby welding a plurality of cathode tabs and a plurality of anode tabs, respectively.

When the joining device 200 is a laser welding device or includes a laser welding device, it includes a laser oscillator, a head unit including an optical system, a welding mask jig, and the like. The laser beam amplified by the oscillator is irradiated through the head unit onto a plurality of cathode or anode electrode tabs or leads fixed to the mask jig, thereby melting and joining them. At this time, the mask jig may have a shape in which the convex or concave portions of the protrusions of the horn and anvil are partially penetrated so that the laser beam can reach the tab bundle or the joining portion between the tab and the lead.

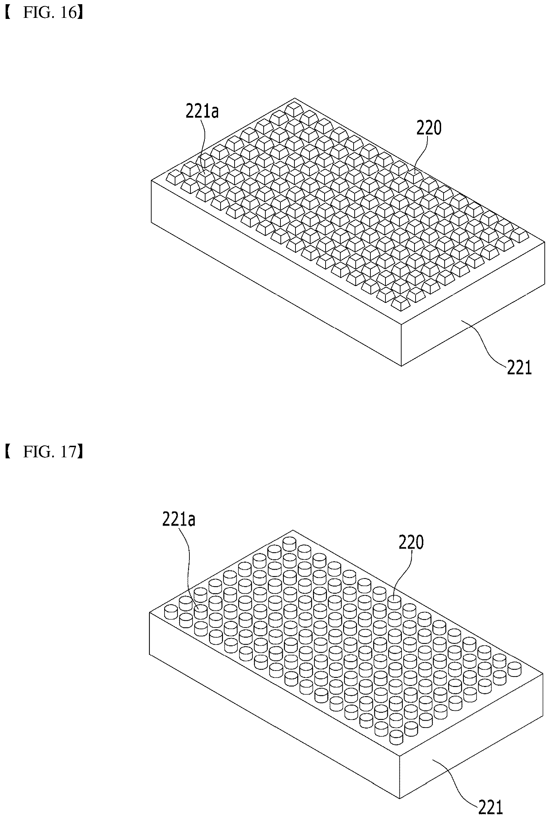

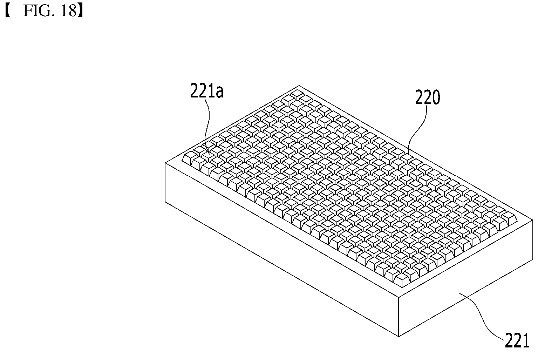

According to an embodiment of the present disclosure, the horn 210 of FIG. 2 is formed with a plurality of horn protrusions 211 that are trapezoidal or rectangular in vertical cross section, and the anvil 220 may also be formed with a plurality of anvil protrusions 221 having a trapezoidal or rectangular shape in vertical cross section. In some cases, the horn protrusion 211 and the anvil protrusion 221 may be fully or partially engaged with each other. That is, each convex protrusion of the plurality of horn protrusions 211 may correspond only to the convex portion between the plurality of anvil protrusions 221. Further, each convex protrusion of the plurality of horn protrusions 211 may correspond to a concave portion between the plurality of anvil protrusions 221, and the concave portion between the plurality of horn protrusions 211 may correspond to each convex protrusion of the plurality of anvil protrusions 221. At this time, for example, the size of the welding surface 221a of the anvil protrusion 221 formed on the anvil 220 may be formed to be smaller than or equal to the size of the welding surface 211a of the horn protrusion 211 formed on the horn 210. If all centers of the horn protrusion 211 and the anvil protrusion 221 coincide with each other, the interval between the anvil protrusions 221 is greater than or equal to the interval between the horn protrusions 211. If the centers of the horn protrusions 211 and the anvil protrusions 221 only partially coincide or do not completely coincide, the interval between the anvil protrusions 221 is less than or equal to the interval between the horn protrusions 211. For reference, FIGS. 16 to 18 illustrate embodiments of the anvil 220, but the present disclosure is not limited thereto, and various modifications and changes can be made.

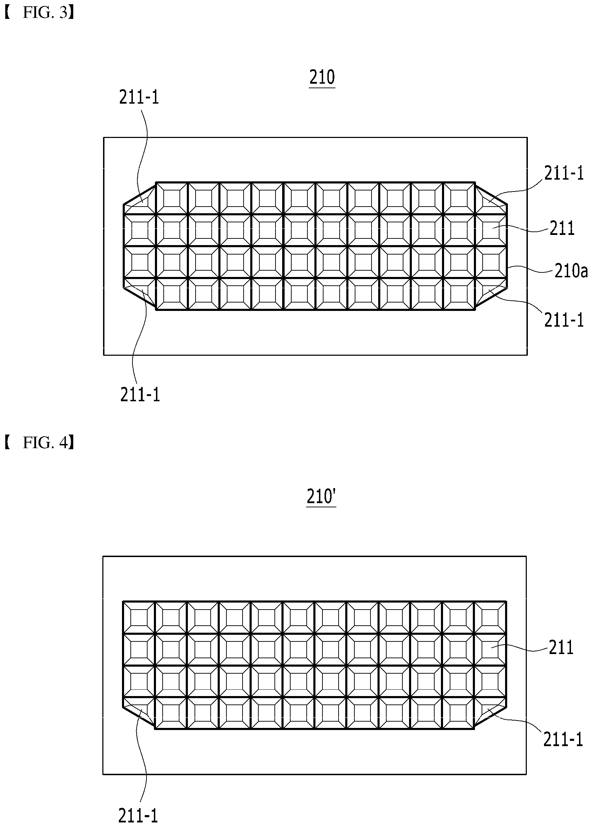

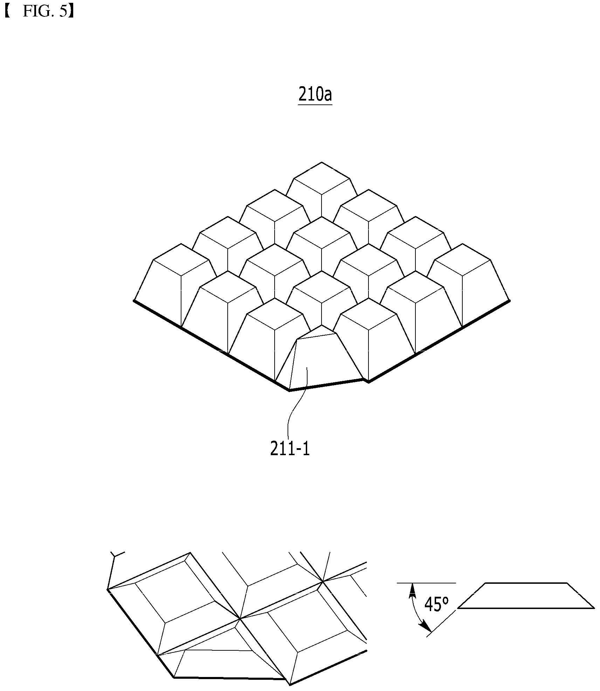

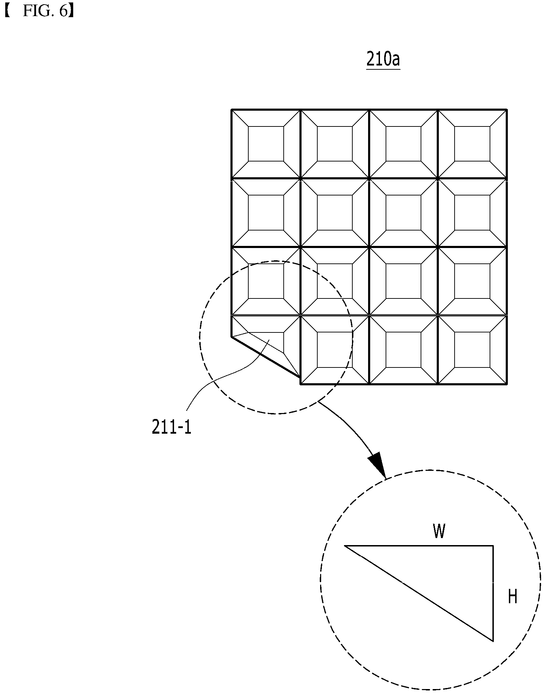

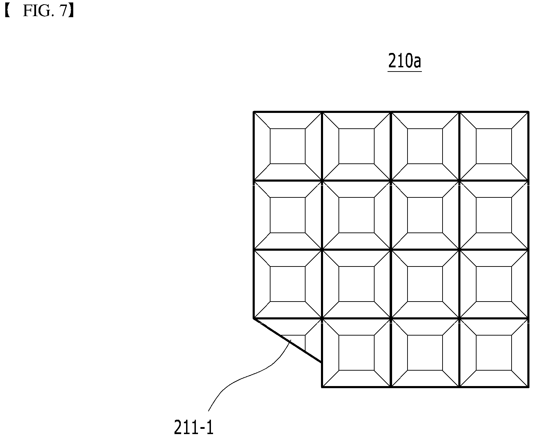

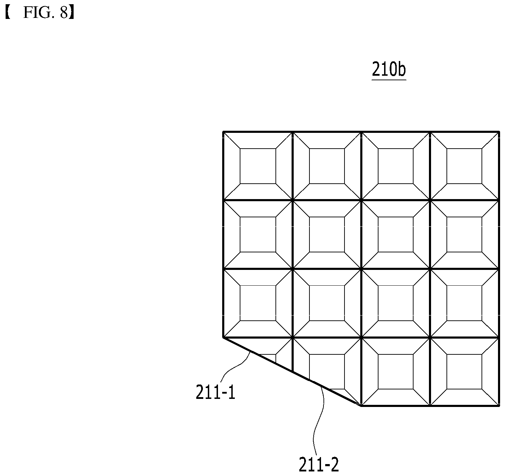

FIG. 3 illustrates a plane view of the horn 210 of a joining device according to an embodiment of the present disclosure. FIG. 4 illustrates a modification of FIG. 3. FIGS. 5 and 6 are partial enlarged views of the horn 210 of FIG. 3, illustrating a perspective view and a plan view, respectively. FIG. 7 illustrates the other modifications of FIGS. 5 and 6. FIG. 8 illustrates yet another embodiment of FIGS. 5 and 6.

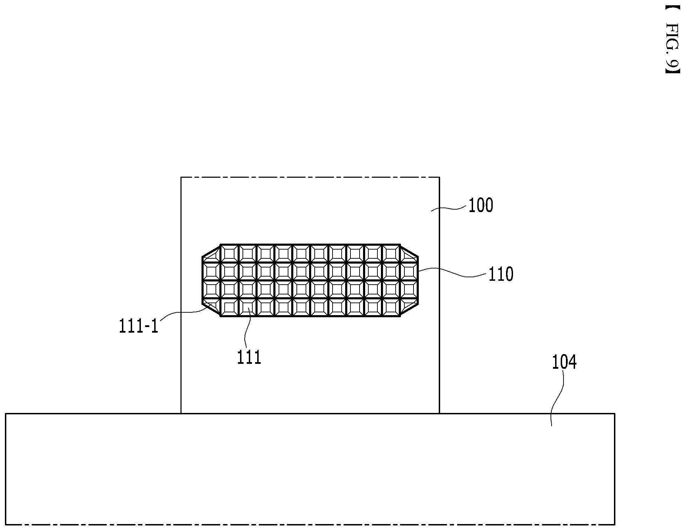

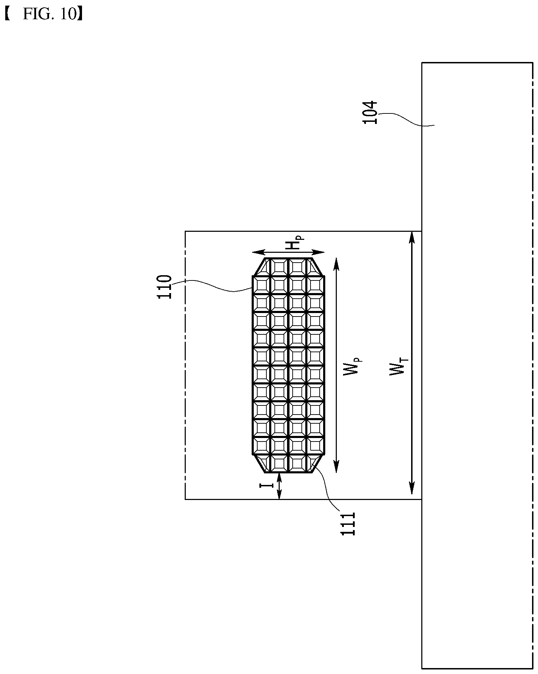

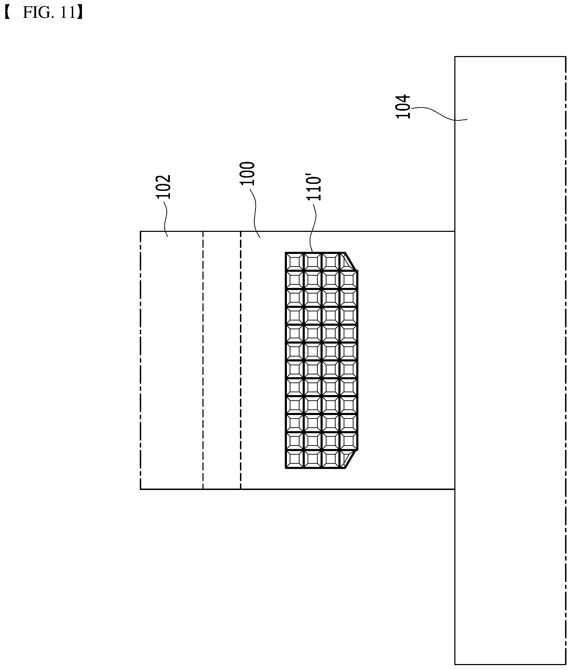

FIGS. 9 and 10 illustrate welding pattern portions 110 formed on at least one surface (e.g., upper surface) of the electrode tab 100 when the electrode tab 100 is welded by the horn 210 of FIG. 3, and FIG. 11 illustrates a welding pattern 110' portion formed on the electrode tab 100 when the electrode tab 100 is welded by the horn 210' of FIG. 4.

Referring to FIG. 3, the horn 210 of the joining device according to an embodiment of the present disclosure includes a welding part 210a that contacts and pressurizes a part to be welded (e.g. an electrode tap bundle or a joining portion between the electrode tap bundle and the electrode lead). The welding portion 210a of the horn 210 is composed of a plurality of horn protrusions 211. More specifically, the welding portion 210a of the horn 210 has a lattice structure in which a plurality of horn protrusions 211 are arranged in a row in the horizontal and vertical directions, respectively. In the embodiment of FIG. 3, the horn protrusion 211 can be modified and changed in various ways, such as having a square shape on the uppermost surface, and having a trapezoidal shape in vertical cross section. In the specification of the present disclosure, the case where the uppermost surface of the horn protrusion 211 has a square shape has been described as an example, but the present disclosure is not limited to those illustrated, and the horn protrusion 211 can be modified and changed in various ways, such as, for example, having a rectangular shape on the uppermost surface, and having a rectangular shape in the vertical cross section.

Referring to FIGS. 3, 9, and 10, when welding the electrode tab 100, the edge of the welding portion 210a of the horn 210 of the joining device is spaced apart from the edge of the electrode tab 100 by a prescribed distance, and is arranged to be parallel to the edge of the electrode tab 100. Further, each side of the square of the horn protrusion 211 is also arranged in parallel to the edge of the electrode tab 100. Thereby, the edge of the welding pattern portion 110 formed on the electrode tab 100 is arranged in parallel to the edge of the electrode tab 100. Each side of the square sub-pattern 111 formed on the electrode tab 100 is also arranged in parallel to the edge of the electrode tab 100. That is, the welding pattern portion 110 has a lattice structure in which a plurality of square sub-patterns 111 are arranged in a row along each of the horizontal and vertical directions of the electrode tab 100. Meanwhile, when the uppermost surface of the horn protrusion 211 is rectangular as described above, the sub-pattern 111 of the welding pattern portion 110 formed on the electrode tab 100 also has a rectangular shape.

Further, the sub-patterns 111 formed on the upper surface of the electrode tab 100 are formed by the horn protrusions 211 of the horn 210 of the joining device, and thus have a concave shape corresponding to the protruding shape of the horn protrusion 211.

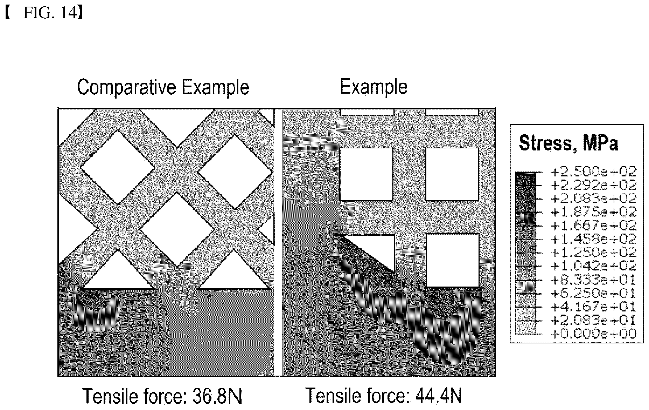

For reference, in the comparative example (see FIG. 14) described later, the welding pattern formed on the electrode tab has a shape in which a plurality of diamonds are aligned in a row along the horizontal and vertical directions of the electrode tab.

According to one embodiment of the present disclosure, the welding pattern portion 110 is formed on the electrode tab 100. More specifically, it can be formed in the electrode tab bundle 100a so as to join the plurality of electrode tabs 100. Alternatively, it may be formed across the electrode tab 100 and the electrode lead 102 so as to join the electrode tab 100 and the electrode lead 102.

According to an embodiment of the present disclosure, when viewed from above, the welding portion 210a of the horn 210 has a rectangular shape as a whole, and in detail, the corners of the welding portion 210a of the horn 210 include chamfered portions. Referring to FIG. 3, all four corners of the welding portion 210a of the horn 210 may include chamfered portions. Referring to FIG. 4, which is a modification of FIG. 3, among the four corners of the welding portion 210a of the horn 210, only two corners toward the main body side of the battery cell, that is, toward the opposite side of the electrode lead 102, may include chamfered portions. In the case of FIG. 4, since a description of portions that overlap with the description of the horn 210 in FIG. 3 is omitted, refer to the description of FIG. 3, and FIGS. 5 to 10 that describe FIG. 3 and FIG. 3 in detail.

According to an embodiment of the present disclosure, the uppermost surface of the horn protrusion 211-1 located at least at the most distal end may include a right-angled triangle or a chamfered portion. Referring to FIGS. 5 and 6, the case where the uppermost surface of the horn protrusion 211-1 is a right-angled triangle is illustrated. That is, in FIGS. 5 and 6, as one embodiment, the uppermost surface of the horn protrusion 211-1 located at the corner of the welding portion 210a of the horn 210, that is, the uppermost surface of the horn protrusion 211-1 located at the most distal end in each of the horizontal and vertical directions of the horn 210 has a right-angled triangle shape. At this time, the ratio between the vertical length(H) and the horizontal length(W) of the uppermost surface of the right-angled triangle of the horn protrusion 211-1 located at the most distal end, that is, the vertical length(H)/ horizontal length(W) value is 0.42 to 0.8, preferably 0.5 to 0.75, more preferably 0.59 to 0.73, and even more preferably 0.7. When the uppermost surface of the horn protrusion 211-1 includes a chamfered portion, the vertical length(H)/horizontal length(W) value of the chamfered portion may be 0.42 to 0.8, preferably 0.5 to 0.75, more preferably 0.59 to 0.73, and even more preferably 0.7. Similarly, the most distal sub-pattern 111-1 of the welding pattern portion 110 formed on the electrode tab 100 also is a shape corresponding to the uppermost surface of the horn protrusion 211-1, and has a right-angled triangle shape or includes a chamfered portion.

Similarly, the ratio between the vertical length(H) and the horizontal length(W) of the most distal sub-pattern 111-1, that is, the vertical length (H)/horizontal length (W) value is 0.4 to 0.82, preferably 0.48 to 0.78, more preferably 0.57 to 0.75, and even more preferably 0.7. The range of the sub-pattern 111-1 may be slightly wider than that of the horn protrusion 211-1. This is because during ultrasonic welding of the sub-pattern 111-1, traces after welding may also remain longer than the horn due to ultrasonic vibration. Further, the interval I in the horizontal direction between the edge of the electrode tab 100 and the edge of the welding pattern portion 110 has a length of 0.011 to 0.1 times the horizontal length of the electrode tab 100.

In this regard, referring to FIG. 10, the length (W_{T}) in the horizontal direction of the electrode tab 100 may be 20 mm to 100 mm. At this time, the length (W_{P}) in the horizontal direction of the welding pattern portion 110 is 19.75 to 99.75, and the length (H_{P}) in the vertical direction may be 1 mm to 10 mm. The length in the horizontal direction of the sub-pattern 111 is 0.3 mm to 1.8 mm, the length in the vertical direction may be 0.3 mm to 1.8 mm, and the length in the horizontal direction and the length in the vertical direction of the sub-pattern 111 may be the same.

On the other hand, after welding, the side surface portion of the horn protrusion 211-1 located at the most distal end may also have an inclination so that the horn 210 can be more easily detached from the electrode tab 100 without being attached to the electrode tab 100. FIG. 5 exemplarily shows a case of having an inclination of 45 degrees. However, the present disclosure is not limited to those illustrated, and as illustrated in FIG. 7, the inclination of the side surface portion of the horn protrusion 211-1 located at the most distal end may also be 90 degrees.

Referring to FIG. 8, as another embodiment, a case in which the uppermost surface of the horn protrusion 211-1 located at the most distal end of the horn 210 has a right-angled triangle shape, and the uppermost surface of the horn protrusion 211-2 neighboring thereto includes a chamfered portion is illustrated. A hypotenuse of the uppermost surface of the right-angled triangle of the horn protrusion 211-1 located at the most distal end and a hypotenuse of the chamfered portion of the uppermost surface of the horn protrusion 211-2 neighboring thereto are on the same extension line. In conclusion, even in the case of FIG. 8, the corner of the welding portion 210a of the horn 210 has a chamfered shape as described above.

Thereby, the sub-pattern 111-1 located at the most distal end of the welding pattern portion 110 of the electrode tab 100 is a right-angled triangle, and the sub-pattern 111-2 neighboring thereto includes a chamfered portion. The hypotenuse of the right-angled triangle of the sub-pattern 111-1 a located at the most distal end and the hypotenuse of the chamfered portion of the neighboring sub-pattern 111-2 are on the same extension line. The corners of the welding pattern portion 110 of the electrode tab 100 have a chamfered shape.

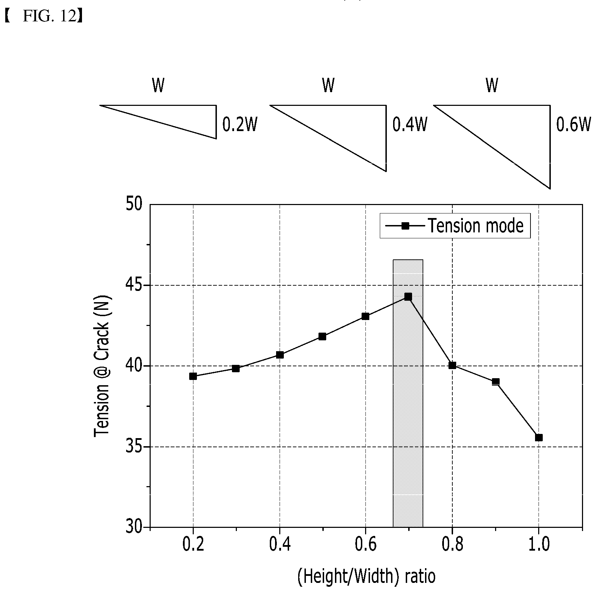

FIG. 12 is a graph showing the tensile strength of the electrode tab 100 in accordance with the ratio between the vertical length(H) and horizontal length(W) of the horn protrusion 211-1 located at the most distal end of the horn 210 of FIG. 5 (i.e., the ratio between the vertical length(H) and the horizontal length(W) of the sub-pattern 111-1 located at the most distal end of the welding pattern portion 110). The tensile strength of the electrode tab 100 can be expressed, for example, as a force (hereinafter referred to as "tensile force") applied to the electrode tab immediately before a crack occurs, while fixing the electrode tab on one side and increasing the other side in the longitudinal direction. The graph in FIG. 12 is a graph derived when the sample size is 45 mm x 50 mm (Width x Height), the size of the welding pattern portion is 43.5 mm x 7.5 mm, and the interval between the fixing grips is 15 mm, using a UTM (LLOYD LS5 model) device.

In other words, the x-axis of the graph in FIG. 12 represents the ratio between the vertical length(H) and the horizontal length(W) of the horn protrusion 211-1 located at the most distal end of the horn 210 (i.e., the ratio between the vertical length(H) and the horizontal length(W) of the sub-pattern 111-1 located at the most distal end of the welding pattern portion 110), and the y-axis represents the tensile force applied immediately before cracks of the electrode tab 100 occur.

Specifically, the tensile strength of the electrode tab varies depending on the ratio between the vertical length(H) and the horizontal length(W) of the sub-pattern 111-1 located at the most distal end of the welding pattern portion 110. According to the graph in FIG. 10, as the ratio between the vertical length(H) and the horizontal length(W), that is, the vertical length(H)/horizontal length(W) value increases from 0 to 0.7, the tensile strength gradually increases, and then in the case of the vertical length(H)/horizontal length(W) = 0.7, the tensile strength of the electrode tab is the highest. Further, it can be confirmed that as the vertical length(H)/horizontal length(W) value increases from 0.7 to 1, the tensile strength of the electrode tab decreases.

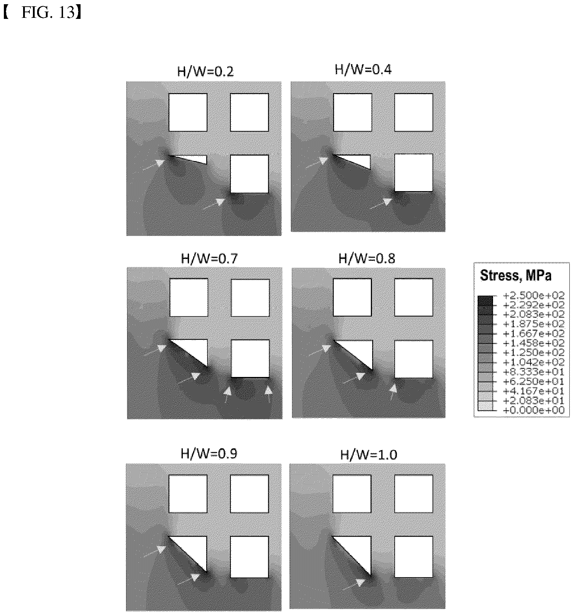

FIG. 13 illustrates a stress distribution chart of the electrode tab 100 in accordance with the ratio between the vertical length(H) and the horizontal length(W) of the horn protrusion 211-1 located at the most distal end of the horn 210 of FIG. 5 (i.e., the ratio between the vertical length(H) and the horizontal length(W) of the sub-pattern 111-1 located at the most distal end of the welding pattern portion 110). Similarly to FIG. 12, FIG. 13 illustrates a stress distribution chart measured immediately before the occurrence of cracks. First, a part where the stress concentration is relatively higher than the peripheral part (hereinafter referred to as the "stress concentration part") is indicated with an arrow for reference. As shown in FIG. 11, this is mainly formed at the corner of the sub-pattern 111-1 located at the most distal end of the welding pattern portion 110 of the electrode tab 100, and in some cases, it may also be formed at the corner of the sub-pattern 111-2 neighboring to the most distal sub-pattern 111-1.

In the stress distribution chart image when the vertical length(H)/horizontal length(W) is 0.2 and 0.4, the stress concentration parts indicated by arrows are shown at two locations, and in the stress distribution chart image when the vertical length (H)/horizontal length (W) is 1.0, the stress concentration part indicated by an arrow is shown at one location.

On the other hand, in the stress distribution chart image when the vertical length(H)/horizontal length(W) is 0.7, the stress concentration parts indicated by arrows are shown at four locations, and it can be seen that the parts where stress is concentrated are more evenly distributed than in the former cases (i.e., vertical length(H)/width length(W) is 0.2, 0.4, or 1.0). That is, it can be seen that the stress dispersion level is higher than in the former case. Thereby, it can be seen that parts having high stress concentration level are distributed relatively evenly on the electrode tab 100, thereby lowering the possibility of occurrence of cracks or fractures due to impact or force applied to the electrode tab 100. That is, it can be seen by referring to the stress distribution chart image in FIG. 11 that the tensile strength of the electrode tab 100 is most excellent when the vertical length(H)/horizontal length(W) is 0.7.

In the stress distribution chart image when the vertical length(H)/horizontal length(W) is 0.8, the stress concentration parts indicated by arrows are shown at three locations, and it can be seen that the stress dispersion level is higher than when the vertical length(H)/horizontal length(W) is 0.2, 0.4, 0.9, or 1.0, and the tensile strength of the electrode tab 100 is excellent. In the stress distribution chart image when the vertical length(H)/horizontal length(W) is 0.9, the stress concentration part indicated by the arrow is shown at two locations, but it can be seen that the stress at the corner of the sub-pattern 111-2 neighboring to the most distal sub-pattern 111-1 is also slightly higher than that of the peripheral part.

Referring to FIG. 14, in the case of the vertical length (H)/horizontal length (W) = 0.7 as Example 1, the tensile force immediately before cracks occur in the electrode tab 100 is 44.4 N. This is greater than the tensile force value of 36.8 N immediately before crack occurrence measured as a comparative example, and thus, it can be confirmed that in the case of the present disclosure, the tensile strength of the electrode tab 100 is superior to that in the comparative example.

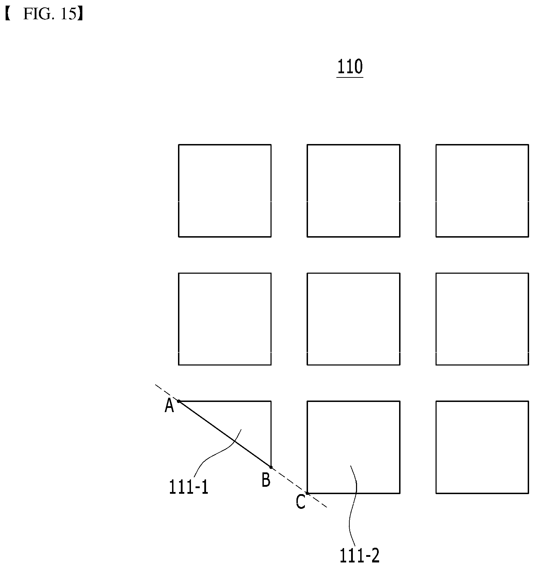

FIG. 15 schematically illustrates a partially enlarged view of the welding pattern portion 110 of the electrode tab 100 of FIG. 3. For example, the welding pattern portion 110 in FIG. 15 may correspond to a partially enlarged view of the horn 210 in FIG. 5. As an embodiment of the present disclosure, the vertex C of the sub-pattern 111-2 may be located on both vertices A and B of the sub-pattern 111-1 located at the most distal end, that is, on an extension line of the hypotenuse of a right-angled triangle. Even in this case, the stress distribution level may increase.

FIGS. 16 to 18 are perspective views of an anvil according to an embodiment of the present disclosure.

As shown in FIGS. 16 to 18, the size of the welding surface 221a of the anvil protrusion 221 formed on the anvil 220 is smaller than the size of the welding surface 211a of the horn protrusion 211 formed on the horn 210 (see FIG. 2), or the size of one welding surface 221a of the anvil protrusion 221 may be the same as the size of the welding surface 211a of one horn protrusion 211.

According to the present disclosure, although not illustrated here, the corner of the welding portion of the anvil 220 corresponding to the welding portion 210a of the horn 210 may also have a chamfered shape. As illustrated in FIG. 3, when all four corners of the welding portion 210a of the horn 210 have a chamfered shape, all four corners of the welding portion of the anvil 220 may have a chamfered shape. Similarly, as illustrated in FIG. 4, which is a modification of FIG. 3, among the four corners of the welding portion 210a of the horn 210, only the two corners toward the main body of the battery cell, that is, toward the opposite side of the electrode lead 102, have a chamfered shape, the anvil 220 may also have a shape in which only two corners of the welding portion corresponding thereto are chamfered.

FIGS. 16 to 18 exemplarily show the shape of the anvil protrusion 221, but the combination of the anvil and the horn is not limited to those illustrated.

On the other hand, the present disclosure provides a battery module including two or more of the above-mentioned battery cells electrically connected (series or parallel). It goes without saying that the number of lithium secondary batteries included in the battery module can be adjusted in various ways, taking into consideration the use and capacity of the battery module. Furthermore, the present disclosure provides a battery pack in which the above-mentioned battery modules are electrically connected according to common techniques in the art.

Such battery modules and battery packs can be used as a power source for any one or more medium- or large-sized devices among power tools; electric vehicles including electric vehicle (EV), hybrid electric vehicle (HEV), and plug-in hybrid electric vehicle (PHEV); electric trucks; electric commercial vehicles; or power storage systems, but are not necessarily limited thereto.

The above-mentioned embodiments are merely illustrative of the present disclosure, and it would be obvious to those skilled in the art that various changes and modifications can be made without departing from the sprit and scope of the present disclosure, and it is natural that such changes and modifications fall within the scope of the appended claims.

### [Description of Reference Numerals]

10: electrode assembly
100: electrode tab
100a: electrode tab bundle
102: electrode lead
104: electrode plate
110, 110': welding pattern portion
111: sub-pattern
111-1: sub-pattern located at the most distal end
200: joining device
210: horn
210a: welding portion
211: horn projection
211-1: horn protrusion located at the most distal end
220: anvil
221: anvil projection

## Claims

1. A battery cell comprising:
an electrode assembly that includes a plurality of electrodes stacked with a separator interposed therebetween; and
a battery case that houses the electrode assembly,
wherein the electrode assembly includes a plurality of electrode tabs each formed to extend from the plurality of electrodes, which are the plurality of electrode tabs including an electrode tab bundle portion coupled between the same polarities, and
wherein a pattern portion is included on at least one surface of the electrode tab bundle portion, the pattern portion includes a plurality of sub-patterns arranged in a row along the horizontal and vertical directions of the electrode tab, respectively, the sub-pattern has a concave shape in the height direction of the electrode tab bundle portion, and a corner of the pattern portion include a chamfered portion.

2. The battery cell according to claim 1, wherein:
The sub-pattern located at least at the most distal end in each of the horizontal and vertical directions among the plurality of sub-patterns has a right-angled triangle shape or includes a chamfered portion.

3. The battery cell according to claim 2, wherein:
the vertical length(H)/horizontal length(W) value of the right-angled triangle or the chamfered portion of the sub-pattern located at the most distal end is 0.4 to 0.82.

4. The battery cell according to claim 3, wherein:
the vertical length(H)/horizontal length(W) value of the right-angled triangle or the chamfered portion of the sub-pattern located at the most distal end is 0.7.

5. The battery cell according to claim 2, wherein:
the rest of the plurality of sub-patterns each have a rectangular or square shape, and
each side of the rectangular or square sub-pattern is arranged to be parallel to an edge of the electrode tab.

6. The battery cell according to claim 5, wherein:
the pattern portion is arranged to be spaced apart from an edge of the electrode tab, and is arranged to be spaced apart between the sub-patterns.

7. The battery cell according to claim 1, wherein:
the pattern portion is formed at a joining portion between the electrode tab bundle portion and the electrode lead.

8. The battery cell according to claim 1, wherein:
the pattern portion has a rectangular shape as a whole, and four corners of the pattern portion each include a chamfered portion.

9. The battery cell according to claim 1, wherein:
the pattern portion has a rectangular shape as a whole, and two corners toward the electrode lead side among the four corners of the pattern portion each include a chamfered portion.

10. The battery cell according to claim 2, wherein:
the sub-pattern located at the most distal end is a right-angled triangle, a sub-pattern neighboring to the sub-pattern located at the most distal end includes a chamfered portion, a hypotenuse of the right-angled triangle of the sub-pattern located at the most distal end and a hypotenuse of the chamfered portion of the neighboring sub-pattern are on the same extension line.

11. The battery cell according to claim 2, wherein:
one vertex of the sub-pattern neighboring to the sub-pattern located at the most distal end is located on an extension line of the hypotenuse of the right-angled triangle of the sub-pattern located at the most distal end.

12. A battery cell joining device including a horn and an anvil for manufacturing a battery cell, the battery cell comprising: an electrode assembly that includes a plurality of electrodes stacked with a separator interposed therebetween, and a battery case that houses the electrode assembly,
wherein the horn includes a welding portion including a plurality of horn protrusions, and
wherein the welding portion includes a plurality of horn protrusions arranged in a row along the horizontal and vertical directions of the horn, respectively, and a corner of the welding portion includes a chamfered portion.

13. The battery cell joining device according to claim 12, wherein:
the uppermost surface of the horn protrusion located at least at the most distal end in each of the horizontal and vertical directions among the plurality of horn protrusions may have a right-angled triangle shape or includes a chamfered portion.

14. The battery cell joining device according to claim 13, wherein:
the vertical length(H)/horizontal length(W) value of the right-angled triangle or the chamfered portion of the uppermost surface of the horn protrusion located at the most distal end is 0.42 to 0.8.

15. The battery cell joining device according to claim 14, wherein:
the vertical length(H)/horizontal length(W) value of the right-angled triangle or the chamfered portion of the uppermost surface of the horn protrusion located at the most distal end is 0.7.

16. The battery cell joining device according to claim 13, wherein:
the uppermost surfaces of the rest of the plurality of horn protrusions each have a rectangular or square shape, and
each side of the rectangular or square shape of the horn protrusion is arranged to be parallel to the edge of the electrode tab.

17. The battery cell joining device according to claim 12, wherein:
the electrode assembly includes a plurality of electrode tabs each formed to extend from the plurality of electrodes, which are the plurality of electrode tabs including an electrode tab bundle portion coupled between the same polarities, and
the battery cell joining device joins the plurality of electrode tabs so as to form the electrode tab bundle portion.

18. The battery cell joining device according to claim 12, wherein:
the electrode assembly includes a plurality of electrode tabs each formed to extend from the plurality of electrodes, which are the plurality of electrode tabs including an electrode tab bundle portion coupled between the same polarities, and
the battery cell joining device joins the electrode tab bundle portion and the electrode lead.

19. The battery cell joining device according to claim 12, wherein:
when viewed from above, the welding portion has a rectangular shape as a whole, and the four corners of the welding portion each includes a chamfered portion.

20. The battery cell joining device according to claim 12, wherein:
when viewed from above, the welding portion has a rectangular shape as a whole, and two corners of the four corners of the welding portion each includes a chamfered portion.

21. The battery cell joining device according to claim 13, wherein:
the uppermost surface of the horn protrusion located at the most distal end has a right-angled triangle, a horn protrusion neighboring to the horn protrusion located at the most distal end includes a chamfered portion, and a hypotenuse of the right-angled triangle of the horn protrusion located at the distal end and a hypotenuse of the chamfered portion of the neighboring horn protrusion are on the same extension line.

22. The battery cell joining device according to claim 13, wherein:
one vertex of the horn protrusion neighboring to the horn protrusion located at the most distal end is located on an extension line of the hypotenuse of the right-angled triangle of the horn protrusion located at the most distal end.

23. The battery cell joining device according to claim 12, wherein:
the battery cell joining device is an ultrasonic welding device or a laser welding device.
